# FASCICULE DE BREVET EUROPEEN

(11) **EP 3 255 406 B1**
(45) Date de publication et mention de la délivrance du brevet: **17.06.2020**
(21) Numéro de dépôt: 17172642.5
(22) Date de dépôt: 24.05.2017
(51) Int. Cl.: G01N 1/22, B01L 5/02, G01N 1/40, G01N 30/08, G01N 30/88, G01N 35/10

(54) **DISPOSITIF DE PRÉLÈVEMENT ET D'ANALYSE D'UN ÉCHANTILLON GAZEUX**
VORRICHTUNG ZUR ENTNAHME UND ANALYSE EINER GASFÖRMIGEN PROBE
DEVICE FOR COLLECTING AND ANALYSING A GAS SAMPLE

(30) Priorité: 09.06.2016 FR 1655295
(43) Date de publication de la demande: 13.12.2017
(73) Titulaire: COMMISSARIAT À L'ÉNERGIE ATOMIQUE ET AUX ÉNERGIES ALTERNATIVES, 75015 Paris (FR)
(72) Inventeur: BOURLON, Bertrand, 38950 SAINT MARTIN LE VINOUX (FR); BECHE, Jean-François, 25200 MONTBELIARD (FR); RICOUL, Florence, 38950 QUAIX EN CHARTREUSE (FR); TRUONG, Bruno, 38100 GRENOBLE (FR)
(74) Mandataire: GIE Innovation Competence Group

(56) Documents cités:
- WO-A1-2012/109237
- WO-A2-2008/021275
- US-A1- 2007 266 858
- US-A1- 2009 223 310

## Description

### Domaine technique de l'invention

La présente invention se rapporte à un dispositif d'analyse d'un échantillon gazeux.

### Etat de la technique

L'analyse de la qualité de l'air est devenue un sujet important, notamment pour détecter des niveaux de pollution. Les analyses de COVs (Composés Organiques Volatils) font par exemple partie des analyses de qualité de l'air mises en œuvre aujourd'hui.

Les dispositifs d'analyse utilisent une colonne de chromatographie en phase gazeuse. L'échantillon gazeux est d'abord introduit en tête de colonne et est emportée à travers la colonne par un gaz vecteur. Les différents composés de l'échantillon gazeux se séparent le long de la colonne selon leur affinité avec la phase stationnaire. Plus le composé aura d'affinités avec la phase stationnaire, plus il mettra de temps à sortir de la colonne. A la sortie de la colonne, les composés séparés de l'échantillon passent dans un détecteur chargé d'évaluer leur quantité au sein du gaz vecteur grâce à la mesure de différentes propriétés physiques. Il génère ainsi des signaux électriques distincts pour chaque composé, formant ainsi un chromatogramme présentant des pics successifs.

Actuellement, pour analyser un échantillon gazeux comme l'air et détecter le niveau de certains polluants, il est connu d'employer une cartouche qui se présente sous la forme d'un tube en verre ou en métal dans lequel est prélevé un échantillon gazeux à analyser. Le tube contenant l'échantillon est ensuite ramené en laboratoire pour analyse. Il est placé dans un dispositif d'analyse tel que décrit ci-dessus et qui permet de détecter la présence et la quantité de certains composés ciblés présents dans l'échantillon. Cette solution d'analyse est très précise mais elle nécessite une installation lourde et demande un certain délai avant d'obtenir des résultats.

Pour pallier ces inconvénients, il a été proposé des dispositifs d'analyse portables qui permettent une analyse sur site de la qualité de l'air. C'est le cas par exemple du dispositif décrit dans le document US2009/22331 0A1 ou bien dans le document WO 2008/021275 A1.

Cependant, la plupart des dispositifs connus présentent certaines contraintes, notamment :
- Ils nécessitent souvent l'usage d'un gaz vecteur pour pousser l'échantillon dans la colonne de chromatographie,
- Les cartouches employées présentent souvent un design propriétaire, ce qui ne leur permet pas d'être compatibles avec d'autres dispositifs d'analyse déjà existants.

Par ailleurs, dans certains cas, on s'est aperçus que lorsque la fenêtre de prélèvement est particulièrement courte, par exemple lors de la présence d'un nuage de pollution toxique, il peut s'avérer nécessaire de faire à la fois une analyse rapide afin de s'assurer de la présence de certains composés toxiques et une analyse plus approfondie pour détecter éventuellement la présence d'autres composés.

Un premier but de l'invention est de proposer un dispositif d'analyse de type portable, qui ne nécessite pas l'emploi d'un gaz vecteur pour assurer le prélèvement et l'analyse et qui soit d'un fonctionnement particulièrement efficace, notamment lorsque la fenêtre de prélèvement s'avère particulièrement courte.

Le dispositif de l'invention présente la particularité d'employer une cartouche de prélèvement amovible qui est compatible à la fois avec le dispositif d'analyse portable utilisable sur site mais également avec une installation d'analyse présente en laboratoire.

Un autre but de l'invention est de proposer un adaptateur qui permet d'utiliser la cartouche amovible du dispositif dans une installation d'analyse présente en laboratoire.

### Exposé de l'invention

Le premier but de l'invention est atteint par un dispositif d'analyse d'un échantillon gazeux tel que défini par la revendication 1.

Selon une particularité, la cartouche comporte :
- Une résistance chauffante,
- Un connecteur électrique connecté à ladite résistance chauffante et destiné à être relié à une source d'alimentation électrique pour alimenter ladite résistance chauffante,
- Une entrée fluidique par laquelle est aspiré ledit échantillon gazeux vers l'intérieur de la cartouche,
- Une sortie fluidique connectée audit préconcentrateur pour évacuer les composés à analyser.

Selon une autre particularité, le deuxième boîtier de la cartouche est réalisé en matériau métallique, ou au moins dans un matériau thermiquement résistant.

Selon une autre particularité, le connecteur de la cartouche est formé de pistes électriques affleurantes sur ledit deuxième boîtier.

Selon une autre particularité, ledit premier boîtier du dispositif présente un logement destiné à recevoir ladite cartouche de prélèvement de manière amovible.

Selon une autre particularité, le dispositif comporte un système de pompage agencé pour aspirer ledit premier échantillon gazeux dans ledit ensemble de détection et pour aspirer ledit deuxième échantillon gazeux dans ledit ensemble de prélèvement.

Selon une autre particularité, le dispositif comporte une première entrée fluidique connectée à l'ensemble de détection et une deuxième entrée fluidique connectée à l'ensemble de prélèvement.

Selon une autre particularité, ladite unité de commande et de traitement est configurée pour exécuter un mode de fonctionnement de réinitialisation de la cartouche.

Selon une autre particularité, le détecteur est de type à conductivité thermique.

Selon une autre particularité, le dispositif comporte une source d'alimentation comportant une batterie amovible et il comporte un connecteur intégré audit premier boîtier auquel est connectée ladite batterie.

A titre d'exemple, il est possible d'utiliser un adaptateur comprenant un socle doté d'un logement destiné à recevoir une cartouche de prélèvement de manière amovible telle que celle employée dans un dispositif d'analyse défini ci-dessus, ledit adaptateur comportant :
- Un connecteur relié à une source d'alimentation électrique et destiné à se connecter sur le connecteur de ladite cartouche pour alimenter sa résistance chauffante,
- Une entrée fluidique destinée à être reliée d'une part à une source de gaz vecteur et d'autre part à l'entrée fluidique de ladite cartouche,
- Une sortie fluidique destinée à être reliée d'une part à la sortie fluidique de ladite cartouche et d'autre part à l'entrée d'une installation d'analyse d'un échantillon gazeux.

L'invention concerne également un procédé d'analyse d'un échantillon gazeux, qui comporte les étapes suivantes mises en oeuvre à l'aide du dispositif d'analyse tel que défini ci-dessus :
- Activation de l'ensemble de détection pour analyser un premier échantillon gazeux,
- Détermination du dépassement d'au moins un seuil d'alerte après analyse dudit premier échantillon gazeux,
- Si un seuil d'alerte est dépassé, activation automatique de l'ensemble de prélèvement pour prélever un deuxième échantillon gazeux.

### Brève description des figures

D'autres caractéristiques et avantages vont apparaître dans la description détaillée qui suit faite en regard des dessins annexés dans lesquels :
- Les figures 1A et 1B représentent, vu en perspective, le dispositif d'analyse de l'invention, respectivement avant insertion de la cartouche et après insertion de la cartouche.
- La figure 2 représente de manière schématique l'architecture du dispositif d'analyse de l'invention des figures 1A et 1B.
- La figure 3 représente, vue en perspective, la cartouche de l'invention.
- La figure 4 représente de manière schématique l'architecture de l'adaptateur de l'invention et illustre son principe de fonctionnement.
- Les figures 5A et 5B illustrent les deux utilisations possibles de la cartouche de l'invention, respectivement lorsque celle-ci est insérée dans le dispositif d'analyse de l'invention et lorsque celle-ci est insérée dans l'adaptateur relié à une installation d'analyse.

### Description détaillée d'au moins un mode de réalisation

L'invention est dans le domaine de l'analyse d'un échantillon de gaz en vue d'en déterminer sa qualité et notamment de générer une alerte en cas de présence trop marquée d'un ou plusieurs composés particulièrement toxiques. De manière connue, il s'agira par exemple d'une analyse d'air de type COV pour déterminer la teneur de l'air en certains composés organiques volatils, tels que les BTEX (Benzène/Toluène/Ethylbenzène/Xylène) ou par exemple d'une analyse de l'air pour alerter d'une menace chimique (présence de gaz sarin).

Pour la suite de la description, on définit notamment l'échantillon gazeux, par exemple de l'air, qui est prélevé dans l'espace ambiant et les composés présents dans cet échantillon gazeux et que l'on souhaite détecter et analyser.

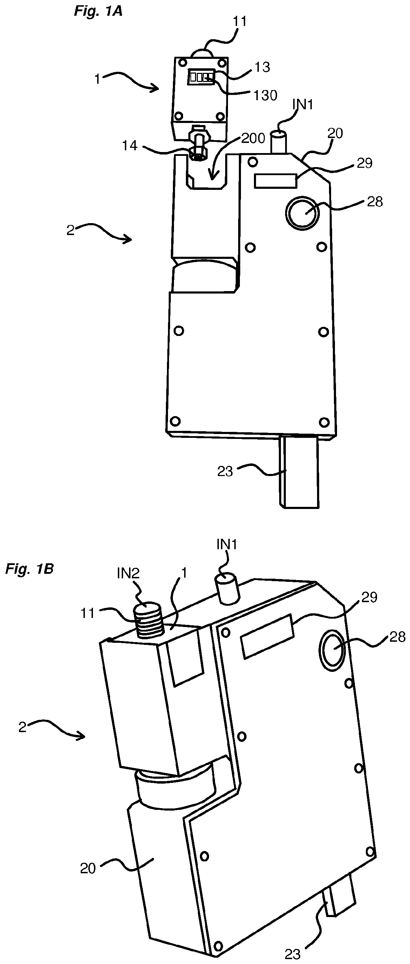

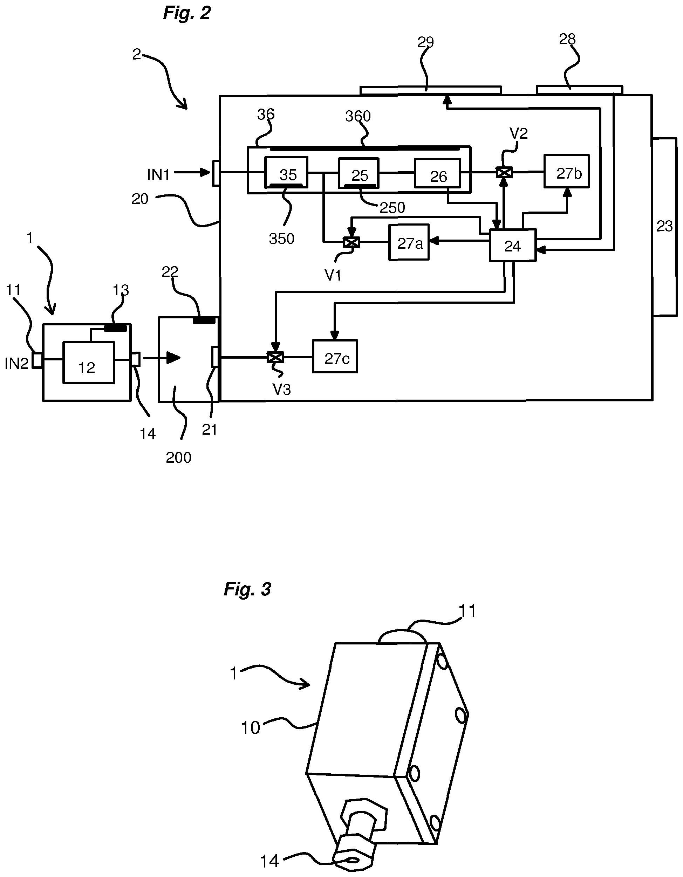

En référence aux figures 1A, 1B et 2, le dispositif d'analyse 2 de l'invention est configuré pour mettre en oeuvre à la fois une fonction d'analyse à l'aide d'une chaîne de détection et une fonction de prélèvement dans une cartouche spécifique décrite ci-dessous.

Le dispositif d'analyse 2 comporte un boîtier 20.

Le dispositif d'analyse 2 comporte un ensemble de détection logé dans le boîtier 20 et un ensemble de prélèvement logé dans le même boîtier 20.

Le dispositif d'analyse comporte avantageusement deux entrées fluidiques distinctes, une première entrée fluidique IN1 menant à l'ensemble de détection et une deuxième entrée fluidique IN2 menant à l'ensemble de prélèvement.

Le dispositif d'analyse comporte un système de pompage.

Le dispositif comporte également une source d'alimentation électrique formée d'une batterie 23 connectée sur le boîtier 20 du dispositif 2.

### Ensemble de détection

L'ensemble de détection comporte un préconcentrateur 35, une colonne de chromatographie 25 en phase gazeuse connectée sur le préconcentrateur, en sortie de celui-ci, et un détecteur 26 connecté en sortie de la colonne.

Le préconcentrateur 35 est relié directement à la première entrée fluidique IN1 du dispositif. Le préconcentrateur 35 permet d'accumuler, à l'aide d'un adsorbant, les composés à détecter présents dans l'échantillon gazeux et permet de les libérer par désorption thermique, sous l'effet d'une montée brutale de la température. Une amplification de la concentration et donc du signal pourra ainsi être obtenue. Un préconcentrateur est par exemple constitué d'un microcomposant en silicium rempli d'au moins un adsorbant (par exemple particules de Tenax - Marque déposée) et muni d'une résistance de chauffage 350 sur sa face inférieure. Des capillaires métalliques ou en silice permettent d'assurer la circulation du mélange de gaz dans le dispositif. Des micro-piliers sont agencés devant la sortie du préconcentrateur pour empêcher la fuite des particules d'adsorbant utilisées.

La colonne de chromatographie 25 en phase gazeuse se présente préférentiellement sous la forme d'une micro-colonne de silicium mais peut-être également une colonne capillaire utilisée classiquement en chromatographie. Une telle colonne est bien connue et comporte un canal interne microscopique dans lequel est injecté l'échantillon prélevé. Ladite colonne 25 est logée dans le boîtier 20 du dispositif 2 et connectée en sortie du préconcentrateur. Le principe de fonctionnement d'une telle colonne est bien connue et ne sera pas détaillée dans la présente demande. Juste pour rappel, la colonne est dotée d'une phase stationnaire grâce à laquelle les différents composés de l'échantillon vont se séparer les uns des autres. La phase stationnaire crée un phénomène de rétention avec les différents composés de l'échantillon. Plus le composé présente d'affinités avec la phase stationnaire, plus il restera longtemps dans la colonne. La colonne 25 est munie d'un dispositif de chauffage 250, alimenté par la batterie 23 du dispositif et porté à une température déterminée pour aider à l'élution des composés les plus lourds, comme bien connu en chromatographie en phase gazeuse.

Le détecteur 26 connecté en sortie de la colonne 25 est destiné à détecter la présence de chaque composé présent dans l'échantillon prélevé. Préférentiellement, il s'agira d'un détecteur électrique de conductivité thermique ("Thermal conductivity detector" TCD en anglais). Un tel détecteur 26 est basé sur le principe du pont de Wheatstone. Le passage des différents composés de l'échantillon dans la ligne d'analyse du pont présentant deux résistances va faire varier la tension aux bornes du pont, cette variation étant due à la différence de conductibilité de chaque composé. L'unité de commande et de traitement 24, qui sera décrite ci-dessous, reçoit ainsi les signaux analogiques de variation de tension et les traite.

L'ensemble de détection comporte également une enceinte chauffante 36 et isolée de façon à assurer, via une résistance chauffante 360, le chauffage de la ligne analytique préconcentrateur-colonne-détecteur. Il est connu dans le domaine de la chimie analytique que pour des composés ayant une masse molaire ou une température d'ébullition élevée, il est nécessaire de chauffer la ligne analytique afin d'assurer une analyse efficace. La présence de points froids le long de cette ligne analytique peut engendrer un élargissement des pics chromatographiques, voire une condensation totale des composés au niveau de ces points froids, dégradant ou rendant impossible les analyses.

L'ensemble de détection sera avantageusement amovible à l'intérieur du support 20.

Le préconcentrateur 35 et la colonne de chromatographie 25 comporte leurs propres moyens de chauffage. Le préconcentrateur et la colonne possèdent en face arrière des puces leur moyen propre pour chauffer et sonder la température des puces. Le préconcentrateur sera chauffé indépendamment de la colonne (par exemple, en montant à 220°C en 10s, et en restant à cette température pendant 5s) de façon à désorber les analytes qui auront été au préalable préconcentrés sur l'adsorbant. La colonne pourra ensuite éventuellement faire une rampe thermique en température pendant la séparation des composés (par exemple : rampe de 80°C à 150°C pendant 1 minute).

La colonne de chromatographie 25 et le preconcentrateur 35 sont maintenus dans des châssis évidés logés dans le boîter 20 du dispositif et ayant une conductivité thermique faible de façon à limiter les transferts de chaleur entre les puces silicium et leur support.

### Ensemble de prélèvement

Le dispositif d'analyse 2 comporte un logement 200 destiné à recevoir une cartouche 1 amovible. Le logement 200 est accessible de l'extérieur de manière à pouvoir y loger aisément la cartouche 1.

La cartouche 1 comporte un boîtier 10 fermé (avantageusement de manière hermétique). Le boîtier de la cartouche est réalisé dans un matériau à haute tenue en température. Il pourra par exemple résister à des températures allant jusqu'à 200°C ou 300°C. De manière non limitative, le boîtier 10 est par exemple réalisé en matériau métallique et est de forme parallélépipédique. Le boîtier 10 de la cartouche sera avantageusement composé de deux parties, l'une d'elles étant un capot amovible.

La cartouche 1 comporte une entrée fluidique 11 ménagée à travers son boîtier 10 et à travers laquelle l'échantillon gazeux est prélevé à l'extérieur grâce au système de pompage du dispositif de l'invention. Cette entrée fluidique 11 comporte un embout spécifique par lequel l'échantillon gazeux est aspiré vers l'intérieur de la cartouche. De plus, cet embout est agencé pour se connecter de manière hermétique sur un embout correspondant d'un adaptateur 3 de manière à être relié à un dispositif d'injection de gaz vecteur. La double fonctionnalité de l'entrée fluidique 11 de la cartouche sera explicitée ci-dessous. Les différents embouts employés sont des embouts standards.

Lorsque la cartouche est intégrée au dispositif, la deuxième entrée fluidique IN2 du dispositif correspond à l'entrée fluidique 11 de la cartouche 1.

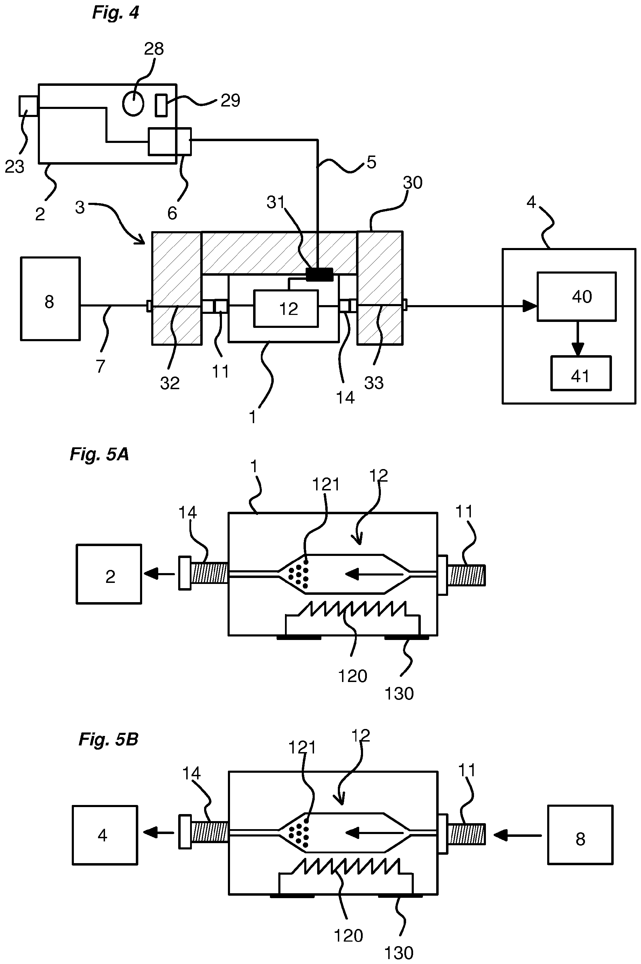

La cartouche comporte également un préconcentrateur 12 logé à l'intérieur de son boîtier et connecté de manière hermétique à son entrée fluidique. Le préconcentrateur 12 permet d'accumuler, à l'aide d'un adsorbant, les composés à détecter présents dans l'échantillon gazeux et permet de les libérer par désorption thermique, sous l'effet d'une montée brutale de la température. Une amplification de la concentration et donc du signal pourra ainsi être obtenue. Comme illustré par les figures 5A et 5B, un préconcentrateur est par exemple constitué d'un microcomposant en silicium rempli d'au moins un adsorbant (par exemple particules de Tenax - Marque déposée) et muni d'une résistance de chauffage 120 sur sa face inférieure. Des capillaires métalliques ou en silice permettent d'assurer la circulation du mélange de gaz dans le dispositif. Des micro-piliers 121 sont agencés devant la sortie du préconcentrateur pour empêcher la fuite des particules d'adsorbant utilisées dans la cartouche.

La cartouche comporte également un connecteur électrique 13, par exemple formé de plusieurs pistes électriques ou lames souples 130 sur la surface de son boîtier et reliées d'une part à la résistance chauffante 120 et à un capteur de température de son préconcentrateur et d'autre part à une source électrique d'alimentation qui permet d'alimenter ladite résistance chauffante 120 et ledit capteur de température du préconcentrateur.

La cartouche 1 comporte également une sortie fluidique 14.

La sortie fluidique 14 de la cartouche peut être reliée au système de pompage du dispositif d'analyse 2 pour assurer un prélèvement par aspiration à l'intérieur de la cartouche lorsque la cartouche est insérée dans le logement du dispositif.

La sortie fluidique de la cartouche peut être employée pour évacuer les composés désorbés pour analyse, vers une installation d'analyse 4 présente en laboratoire. La connexion fluidique de cette sortie avec l'adaptateur 3 décrit ci-dessous sera préférentiellement à faible volume mort.

La cartouche 1 est positionnée dans le logement 200 de manière à laisser son entrée fluidique 11 en contact avec l'air ambiant afin de permettre un prélèvement d'échantillon gazeux par aspiration.

Le dispositif d'analyse 2 comporte également une entrée fluidique 21, préférentiellement à faible volume mort, sur laquelle vient se connecter la sortie fluidique 14 de la cartouche 1 lorsque la cartouche est positionnée dans son logement 200.

Le dispositif d'analyse 2 comporte un connecteur 22 intégré au boîtier 20 et par exemple formé de plusieurs pistes électriques ou lames souples ménagées dans ledit logement 200 de manière à venir se connecter sur le connecteur 13 présent sur la cartouche 1. Chaque piste électrique du connecteur du dispositif vient en contact électrique avec une piste ou lame souple correspondante du connecteur de la cartouche lorsque la cartouche 1 est insérée dans le logement 200.

Le dispositif d'analyse 2 comporte également une source d'alimentation électrique, par exemple une batterie 23. Celle-ci-sera préférentiellement amovible et connectée au dispositif d'analyse 2 par un connecteur accessible de l'extérieur et intégré au boîtier 20 du système. Cette batterie 23 permet d'alimenter les différents éléments du dispositif décrits ci-dessous, notamment son unité de commande et de traitement 24 et son système de pompage, ainsi que les différentes solutions de chauffage.

Le dispositif d'analyse 2 comporte une unité de commande et de traitement 24 destinée à gérer le fonctionnement du dispositif. Cette unité 24 est alimentée par ladite batterie 23 et agencée pour mettre en oeuvre différents modes de fonctionnement, notamment un mode de fonctionnement de prélèvement et d'analyse et éventuellement un mode de fonctionnement de réinitialisation de la cartouche 1. Ces modes de fonctionnement seront explicités ci-dessous.

Le dispositif d'analyse 2 comporte un système de pompage alimenté par ladite batterie 23.

En référence à la figure 2, ce système de pompage comporte au moins une première pompe 27a d'aspiration d'un échantillon fluidique dans le préconcentrateur 35 de l'ensemble de détection, à travers la première entrée fluidique IN1. Cette première pompe 27a est connectée, via une première vanne V1, entre le préconcentrateur 35 et la colonne 25.

Le système de pompage comporte également une deuxième pompe 27b connectée sur la sortie du détecteur 26 de l'ensemble de détection et destinée à aspirer les composés désorbés dans le préconcentrateur 35 à travers la colonne 25 et jusqu'au détecteur 26, par l'intermédiaire d'une vanne V2 commandée.

Le système de pompage comporte une troisième pompe 27c destinée à aspirer un échantillon fluidique dans l'ensemble de prélèvement, à travers la deuxième entrée fluidique IN2, via une troisième vanne V3 commandée.

Tout autre agencement du système de pompage pourra bien entendu être envisagé. Une même pompe avec deux circuits d'aspiration distincts, utilisant des vannes ou dispositif de clapet, pourrait notamment être employée. Des vannes commandées par l'unité de commande et de traitement 24 sont bien entendu prévues pour assurer la circulation de l'échantillon dans le dispositif.

Pour sa commande, le dispositif d'analyse 2 comporte un ou plusieurs organes de commande 28 intégrés au boîtier et reliés sur des entrées de son unité de commande et de traitement 24.

Le dispositif d'analyse 2 comporte avantageusement une unité de signalisation, comportant par exemple un afficheur 29 ou autre interface homme-machine, et chargée d'indiquer à l'utilisateur l'état du dispositif et différents résultats issus de l'analyse de l'échantillon gazeux. Le dispositif pourra également disposer de moyens de communication pour envoyer les résultats à travers une liaison filaire ou sans-fil vers un terminal, par exemple un terminal mobile. La liaison de communication pourra être employée de manière bidirectionnelle, pour envoyer les résultats du dispositif vers le terminal et pour paramétrer le dispositif depuis le terminal (par exemple : réglage des seuils d'alerte - voir ci-après).

L'unité de commande et de traitement 24 est configurée pour assurer le fonctionnement du dispositif.

Avantageusement, l'unité de commande et de traitement 24 met en œuvre un mode de fonctionnement d'analyse particulier.

Dans ce mode de fonctionnement d'analyse, le dispositif d'analyse 2 fonctionne de la manière suivante :
- L'utilisateur génère une commande d'analyse par action sur un organe de commande 28 du dispositif 2, lançant le mode de fonctionnement d'analyse du dispositif.
- L'unité de commande et de traitement 24 ouvre la vanne V1 et active la première pompe 27a pour commander l'aspiration d'un échantillon gazeux à l'intérieur du préconcentrateur de l'ensemble de détection à travers la première entrée fluidique IN1. La vanne V2 est fermée.
- Le préconcentrateur 12 capte les composés ciblés par adsorption.
- Une fois la phase de préconcentration terminée, l'unité de commande et de traitement 24 active le chauffage de la résistance chauffante 120 du préconcentrateur 12 de manière à désorber les composés accumulés.
- L'unité de commande et de traitement 24 ouvre la vanne V2 et active la deuxième pompe 27b pour évacuer les composés désorbés par aspiration vers la colonne 25 puis dans le détecteur 26 à conductivité thermique. Cette évacuation vers le dispositif sera réalisée par aspiration d'un volume d'air qui emporte lesdits composés. La vanne V1 est fermée.
- Le détecteur 26 génère des pics de tension successifs, qui correspondent au passage de chaque composé et qui sont destinés à être interprétés par l'unité de commande et de traitement 24.
- L'unité de commande et de traitement 24 analyse les différents pics de tension obtenus (chromatogramme), par exemple en les comparant à des seuils d'alerte prédéfinis de manière à générer ou non une alerte.
- En cas de dépassement d'un seuil d'alerte, l'unité de commande et de traitement 24 commande immédiatement un nouveau prélèvement dans l'ensemble de prélèvement.
- L'unité de commande et de traitement 24 ouvre la vanne V3 et active la troisième pompe 27c de manière à aspirer un échantillon fluidique dans l'ensemble de prélèvement, c'est-à-dire dans la cartouche, à travers la deuxième entrée fluidique IN2.
- La cartouche pourra ensuite être extraite du dispositif pour une analyse plus approfondie dans une installation 4 de type chromatographe présente en laboratoire (voir ci-dessous).

La durée qui s'écoule entre le premier prélèvement pour analyse par l'ensemble de détection et le deuxième prélèvement après détection du dépassement d'un seuil d'alerte pour au moins un composé, doit être la plus courte possible afin de permettre de réaliser le deuxième prélèvement dans les conditions proches, même identiques, à celles du premier prélèvement. Cette durée sera avantageusement inférieure à 1 minute.

Il faut noter que la commande de l'ensemble de prélèvement, après la présence d'une alerte, est mise en œuvre automatiquement par l'unité de commande et de traitement 24, sans intervention de l'utilisateur. Une autre option serait de lancer une proposition à l'utilisateur de réaliser le deuxième prélèvement dans la cartouche en cas de dépassement d'un seuil d'alerte.

Ladite installation 4 comporte une colonne de chromatographie 40 et un détecteur 41. Cette installation sera habituellement dédiée à l'analyse d'échantillons gazeux prélevés dans des cartouches telles que des tubes de verre et positionnés dans une unité d'accueil adaptée. Pour analyser le nouveau prélèvement effectué, la cartouche 1 est retirée du logement 200 du dispositif pour être placée dans un adaptateur 3 spécifique qui permet alors le transfert de l'échantillon gazeux prélevé dans la cartouche vers une installation d'analyse 4.

Ainsi, l'adaptateur 3 de l'invention permet de positionner la cartouche 1 de l'invention en parallèle de l'unité d'accueil de l'installation 4, sans avoir à modifier la structure de l'installation 4 existante. En référence à la figure 4, cet adaptateur 3 comporte avantageusement un socle formé d'un boîtier 30 définissant un logement de forme adaptée pour accueillir la cartouche 1. Ledit socle sera par exemple en deux parties pour y insérer aisément la cartouche, celle-ci étant positionnée entre ses deux parties. L'adaptateur comporte avantageusement des moyens d'assemblage de ses deux parties.

De manière avantageuse, l'analyse réalisée par l'installation est commandée à l'aide du dispositif d'analyse 2 décrit ci-dessus. Celui-ci est connectée électriquement à l'adaptateur 3 et commande la désorption des composés présents dans la cartouche comme si la cartouche 1 était dans son logement 200.

L'adaptateur 3 comporte également un connecteur électrique 31 intégré à son boîtier 30 et relié d'un côté au connecteur 13 de la cartouche 1 lorsque celle-ci est positionnée dans son logement et de l'autre côté à un câble d'alimentation 5 relié à une source d'alimentation électrique. Comme pour le dispositif d'analyse, ce connecteur 31 comporte avantageusement plusieurs pistes électriques ou lames souples destinées chacune à coopérer avec une piste électrique ou lame souple distincte du connecteur 13 de la cartouche 1. Il est relié à la source d'alimentation électrique pour alimenter la cartouche, notamment sa résistance chauffante 120. Avantageusement, la source d'alimentation électrique employée est celle du dispositif d'analyse de l'invention, c'est-à-dire la batterie 23. Un bloc de reprise de contact 6 est ainsi placé dans le logement 200 du dispositif d'analyse 2 et comporte un connecteur muni de pistes électriques ou lames souples coopérant avec les pistes électriques ou lames souples du dispositif 2 et reliées à la batterie 23. Le câble 5 permet avantageusement de relier électriquement ce bloc de contact 6 au connecteur 31 de l'adaptateur.

L'adaptateur 3 comporte également une entrée fluidique 32 connectée sur l'entrée fluidique 11 de la cartouche 1 lorsque celle-ci est positionnée dans le logement de l'adaptateur 3 et sur laquelle est connectée une source pressurisée 8 de gaz vecteur. Cette entrée fluidique 32 présente ainsi un premier embout de forme adaptée pour coopérer avec l'embout de l'entrée fluidique 11 de la cartouche 1 et un deuxième embout destiné à coopérer avec un embout correspondant réalisé à l'extrémité d'un tuyau 7 relié à ladite source pressurisée 8 de gaz vecteur (figure 4). De manière connue, le gaz vecteur est une phase mobile de la chromatographie en phase gazeuse et permet de véhiculer l'échantillon gazeux le long de la colonne de chromatographie et du détecteur de l'installation. Le gaz vecteur est typiquement de l'hélium, du dihydrogène ou du diazote. Le gaz vecteur ne génère aucun signal électrique sur un chromatogramme.

L'adaptateur 3 comporte une sortie fluidique 33 à faible volume mort destinée à coopérer d'un côté avec la sortie fluidique 14 de la cartouche lorsque celle-ci est positionnée dans le logement de l'adaptateur et de l'autre côté avec l'installation 4 et plus précisément avec la colonne de chromatographie 40 de cette installation de manière à pouvoir y injecter directement l'échantillon gazeux présent dans la cartouche 1.

Pour une analyse dans une installation 4 présente en laboratoire, le principe de fonctionnement est le suivant :
- La cartouche 1 comportant un échantillon gazeux prélevé sur le site, est positionné dans l'adaptateur 3 décrit ci-dessus, en connectant l'entrée fluidique 11 de la cartouche à l'entrée fluidique 32 de l'adaptateur 3 pour recevoir du gaz vecteur en provenance du réservoir 8 et en alimentant électriquement l'adaptateur en connectant le connecteur de l'adaptateur audit bloc de contact 6 décrit ci-dessus et inséré dans le logement 200 du dispositif d'analyse 2 de l'invention.
- L'utilisateur génère une commande d'analyse par action sur un organe de commande 28 du dispositif 2, lançant le mode de fonctionnement d'analyse du dispositif.
- L'unité de commande et de traitement 24 active le chauffage du préconcentrateur présent dans la cartouche de façon à désorber les composés accumulés dans le préconcentrateur.
- Une fois les composés désorbés, ceux-ci sont automatiquement emportés vers l'installation 4 par le gaz vecteur.
- Grâce à sa colonne 40 et son détecteur 41, l'installation d'analyse 4 analyse les composés prélevés et génère un chromatogramme précis des différents composés détectés dans l'échantillon.

Le mode de fonctionnement de réinitialisation d'une cartouche dans le dispositif de l'invention consiste à réinitialiser la cartouche 1 présente dans le logement 200 du dispositif 2 et donc à la nettoyer pour que celle-ci puisse être à nouveau utilisée. Dans le mode de fonctionnement de réinitialisation, le dispositif d'analyse 2 fonctionne de la manière suivante :
- L'utilisateur génère une commande de réinitialisation de la cartouche par action sur un organe de commande 28 du dispositif.
- L'unité de commande et de traitement 24 commande l'alimentation de la résistance chauffante 120 de la cartouche 1 ainsi que le pompage en mettant en route la troisième pompe 27c, ce qui a pour effet de nettoyer le préconcentrateur 12 en mettant en œuvre une désorption. La cartouche 1 est alors nettoyée.
- Avant toute nouvelle réutilisation de la cartouche, il est nécessaire d'attendre son refroidissement. Par la suite, un nouveau prélèvement peut être effectué dans la même cartouche.

La solution complète de l'invention présente ainsi de nombreux avantages, parmi lesquels :
- Elle permet de réaliser un prélèvement sur site aisément de manière à obtenir une analyse rapide, par la génération d'une alerte.
- Après une alerte, le dispositif permet rapidement de commander le deuxième prélèvement, même sans aucune action de l'utilisateur.
- Le dispositif d'analyse est totalement autonome en énergie et peu encombrant, celui-ci fonctionnant sur batterie et sans source de gaz vecteur (bouteille de gaz pressurisé) Cette absence de source de gaz pressurisé réduit les besoins en maintenance, et rend le dispositif intéressant pour des applications de type surveillance continue.
- Le dispositif ne nécessite éventuellement qu'une seule cartouche car celle-ci est réutilisable.
- En connectant directement la cartouche sur l'adaptateur, une analyse plus poussée d'un échantillon peut être réalisée en laboratoire (par exemple sur un système de type GC-MS).

## Revendications

1. Dispositif d'analyse (2) d'un échantillon gazeux comprenant un premier boîtier (20) et **caractérisé en ce qu'**il comporte :
- Un ensemble de détection logé dans ledit premier boîtier (20) comprenant un premier préconcentrateur (35) destiné à réaliser une préconcentration des composés à analyser de l'échantillon gazeux et une injection, une colonne de chromatographie (25) destinée à séparer lesdits composés présents dans ledit échantillon gazeux prélevé dans ledit premier préconcentrateur (35) et un détecteur (26) connecté en sortie de ladite colonne de chromatographie et destiné à détecter la présence desdits composés séparés,
- Un ensemble de prélèvement comprenant une cartouche amovible par rapport audit premier boîtier (20), ladite cartouche comportant un deuxième boîtier renfermant un deuxième préconcentrateur (12) destiné à réaliser une préconcentration des composés à analyser de l'échantillon gazeux,
- Une unité de commande et de traitement (24) logée dans ledit boîtier (20) et configurée pour exécuter un mode de fonctionnement d'analyse dans lequel elle est apte à générer une première commande de l'ensemble de détection pour analyser un premier échantillon gazeux, une deuxième commande de détermination de dépassement d'au moins un seuil d'alerte et, si un seuil d'alerte est dépassé, une troisième commande de l'ensemble de prélèvement pour prélever un deuxième échantillon gazeux.

2. Dispositif selon la revendication 1, **caractérisé en ce que** ladite cartouche comporte :
- Une résistance chauffante (120),
- Un connecteur électrique (13) connecté à ladite résistance chauffante (120) et destiné à être relié à une source d'alimentation électrique pour alimenter ladite résistance chauffante (120),
- Une entrée fluidique (11) par laquelle est aspiré ledit échantillon gazeux vers l'intérieur de la cartouche (1),
- Une sortie fluidique (14) connectée audit deuxième préconcentrateur (12) pour évacuer les composés à analyser.

3. Dispositif selon la revendication 1 ou 2, **caractérisée en ce que** le deuxième boîtier (10) de la cartouche est réalisé en matériau métallique.

4. Dispositif selon l'une des revendications 1 à 3, **caractérisée en ce que** le connecteur (13) est formé de pistes électriques affleurantes sur ledit deuxième boîtier.

5. Dispositif selon l'une des revendications 1 à 4, **caractérisé en ce que** ledit premier boîtier (20) présente un logement (200) destiné à recevoir ladite cartouche (1) de prélèvement de manière amovible.

6. Dispositif selon l"une des revendications 1 à 5, **caractérisé en ce qu'**il comporte un système de pompage agencé pour aspirer ledit premier échantillon gazeux dans ledit ensemble de détection et pour aspirer ledit deuxième échantillon gazeux dans ledit ensemble de prélèvement.

7. Dispositif selon l'une des revendications 1 à 6, **caractérisé en ce qu'**il comporte une première entrée fluidique (IN1) connectée à l'ensemble de détection et une deuxième entrée fluidique (IN2) connectée à l'ensemble de prélèvement.

8. Dispositif selon l'une des revendications 1 à 7, **caractérisé en ce que** ladite unité de commande et de traitement (24) est configurée pour exécuter un mode de fonctionnement de réinitialisation de la cartouche (1).

9. Dispositif selon l'une des revendications 1 à 8, **caractérisé en ce que** le détecteur (26) est de type à conductivité thermique.

10. Dispositif selon l'une des revendications 1 à 9, **caractérisé en ce qu'**il comporte une source d'alimentation électrique comprenant au moins une batterie (23) amovible et **en ce qu'**il comporte un connecteur intégré au premier boîtier auquel est connectée ladite batterie (23).

11. Procédé d'analyse d'un échantillon gazeux, **caractérisé en ce qu'**il comporte les étapes suivantes mises en œuvre à l'aide du dispositif d'analyse tel que défini dans l'une des revendications 1 à 10 :
- Activation de l'ensemble de détection pour analyser un premier échantillon gazeux,
- Détermination du dépassement d'au moins un seuil d'alerte après analyse dudit premier échantillon gazeux,
- Si un seuil d'alerte est dépassé, activation automatique de l'ensemble de prélèvement pour prélever un deuxième échantillon gazeux.

## Patentansprüche

1. Vorrichtung (2) zur Analyse einer gasförmigen Probe, die ein erstes Gehäuse (20) beinhaltet und **dadurch gekennzeichnet ist, dass** sie Folgendes umfasst:
- eine Detektionsanordnung, die in dem ersten Gehäuse (20) untergebracht ist und Folgendes beinhaltet: einen ersten Vorkonzentrator (35), der dazu bestimmt ist, eine Vorkonzentration der zu analysierenden Verbindungen der gasförmigen Probe und eine Injektion vorzunehmen, eine Chromatographiesäule (25), die dazu bestimmt ist, die in der aus dem ersten Vorkonzentrator (35) entnommenen, gasförmigen Probe enthaltenen Verbindungen zu trennen, und einen Detektor (26), der mit dem Auslass der Chromatographiesäule verbunden ist und dazu bestimmt ist, die Gegenwart der getrennten Verbindungen zu detektieren,
- eine Entnahmeanordnung, die eine mit Bezug auf das erste Gehäuse (20) entfernbare Kartusche beinhaltet, wobei die Kartusche ein zweites Gehäuse umfasst, das einen zweiten Vorkonzentrator (12) umschließt, der dazu bestimmt ist, eine Vorkonzentration der zu analysierenden Verbindungen der gasförmigen Probe vorzunehmen,
- eine Steuerungs- und Verarbeitungseinheit (24), die in dem Gehäuse (20) untergebracht ist und dazu konfiguriert ist, eine Analysebetriebsart auszuführen, in der sie fähig ist, Folgendes zu generieren: einen ersten Steuerbefehl für die Detektionsanordnung, um eine erste gasförmige Probe zu analysieren, einen zweiten Steuerbefehl für die Bestimmung einer Überschreitung mindestens einer Alarmschwelle und, wenn eine Alarmschwelle überschritten wird, einen dritten Steuerbefehl für die Entnahmeanordnung, um eine zweite gasförmige Probe zu entnehmen.

2. Vorrichtung nach Anspruch 1, **dadurch gekennzeichnet, dass** die Kartusche Folgendes umfasst:
- einen Heizwiderstand (120),
- einen elektrischen Verbinder (13), der mit dem Heizwiderstand (120) verbunden ist und dazu bestimmt ist, an eine Stromquelle angeschlossen zu werden, um den Heizwiderstand (120) mit Strom zu versorgen,
- einen Fluideinlass (11), durch den die gasförmige Probe in das Innere der Kartusche (1) gesaugt wird,
- einen Fluidauslass (14), der mit dem zweiten Vorkonzentrator (12) verbunden ist, um die zu analysierenden Verbindungen abzuführen.

3. Vorrichtung nach Anspruch 1 oder 2, **dadurch gekennzeichnet, dass** das zweite Gehäuse (10) der Kartusche aus einem metallischen Werkstoff hergestellt ist.

4. Vorrichtung nach einem der Ansprüche 1 bis 3, **dadurch gekennzeichnet, dass** der Verbinder (13) aus elektrischen Bahnen gebildet ist, die das zweite Gehäuse berühren.

5. Vorrichtung nach einem der Ansprüche 1 bis 4, **dadurch gekennzeichnet, dass** das erste Gehäuse (20) eine Aufnahme (200) aufweist, die dazu bestimmt ist, die Entnahmekartusche (1) auf entfernbare Weise aufzunehmen.

6. Vorrichtung nach einem der Ansprüche 1 bis 5, **dadurch gekennzeichnet, dass** sie ein Pumpsystem umfasst, das zum Ansaugen der ersten gasförmigen Probe in die Detektionsanordnung und zum Ansaugen der zweiten gasförmigen Probe in die Entnahmeanordnung angeordnet ist.

7. Vorrichtung nach einem der Ansprüche 1 bis 6, **dadurch gekennzeichnet, dass** sie einen ersten Fluideinlass (IN1), der mit der Detektionsanordnung verbunden ist, und einen zweiten Fluideinlass (IN2), der mit der Entnahmeanordnung verbunden ist, umfasst.

8. Vorrichtung nach einem der Ansprüche 1 bis 7, **dadurch gekennzeichnet, dass** die Steuerungs- und Verarbeitungseinheit (24) dazu konfiguriert ist, eine Betriebsart für das Zurücksetzen der Kartusche (1) auszuführen.

9. Vorrichtung nach einem der Ansprüche 1 bis 8, **dadurch gekennzeichnet, dass** der Detektor (26) vom wärmeleitfähigen Typ ist.

10. Vorrichtung nach einem der Ansprüche 1 bis 9, **dadurch gekennzeichnet, dass** sie eine Stromquelle umfasst, die mindestens eine entfernbare Batterie (23) beinhaltet, und dass sie einen in das erste Gehäuse integrierten Verbinder umfasst, mit dem die Batterie (23) verbunden ist.

11. Verfahren zur Analyse einer gasförmigen Probe, **dadurch gekennzeichnet, dass** es die folgenden Schritte umfasst, die mit Hilfe der Analysevorrichtung gemäß Definition in einem der Ansprüche 1 bis 10 umgesetzt werden:
- Aktivieren der Detektionsanordnung, um eine erste gasförmige Probe zu analysieren,
- Bestimmen der Überschreitung mindestens einer Alarmschwelle nach der Analyse der ersten gasförmigen Probe,
- wenn eine Alarmschwelle überschritten wird, automatisches Aktivieren der Entnahmeanordnung, um eine zweite gasförmige Probe zu entnehmen.

## Claims

1. Device for analysing (2) a gas sample comprising a first housing (20) and **characterized in that** it comprises:
- a detection assembly housed in said first housing (20) comprising a first preconcentrator (35) intended to perform a preconcentration of the compounds to be analysed of the gas sample and an injection, a chromatography column (25) intended to separate said compounds present in said gas sample taken in said first preconcentrator (35) and a detector (26) connected at the outlet of said chromatography column and intended to detect the presence of said separated compounds,
- a sampling assembly comprising a cartridge that is removable relative to said first housing (20), said cartridge comprising a second housing enclosing a second preconcentrator (12) intended to perform a preconcentration of the compounds to be analysed of the gas sample,
- a control and processing unit (24) housed in said housing (20) and configured to execute an analysis operating mode in which it is capable of generating a first command for the detection assembly to analyse a first gas sample, a second command to determine the exceeding of at least one alert threshold and, if an alert threshold is exceeded, a third command for the sampling assembly to take a second gas sample.

2. Device as claimed in Claim 1, **characterized in that** said cartridge comprises:
- a heating resistor (120),
- an electrical connector (13) connected to said heating resistor (120) and intended to be linked to an electrical power source to power said heating resistor (120),
- a fluid inlet (11) through which said gas sample is sucked to the interior of the cartridge (1),
- a fluid outlet (14) connected to said second preconcentrator (12) to discharge the compounds to be analysed.

3. Device as claimed in Claim 1 or 2, **characterized in that** the second housing (10) of the cartridge is produced in a metal material.

4. Device according to one of Claims 1 to 3, **characterized in that** the connector (13) is formed by flush electrical tracks on said second housing.

5. Device according to one of Claims 1 to 4, **characterized in that** said first housing (20) has a recess (200) intended to receive said sampling cartridge (1) removably.

6. Device according to one of Claims 1 to 5, **characterized in that** it comprises a pumping system arranged to suck said first gas sample into said detection assembly and to suck said second gas sample into said sampling assembly.

7. Device according to one of Claims 1 to 6, which comprises a first fluid inlet (IN1) connected to the detection assembly and a second fluid inlet (IN2) connected to the sampling assembly.

8. Device according to one of Claims 1 to 7, **characterized in that** said control and processing unit (24) is configured to execute a cartridge (1) reinitialization operating mode.

9. Device according to one of Claims 1 to 8, **characterized in that** the detector (22) is of the type with thermal conductivity.

10. Device according to one of Claims 1 to 9, **characterized in that** it comprises an electrical power source comprising at least one removable battery (23) and **in that** it comprises a connector incorporated in the first housing to which said battery (23) is connected.

11. Method for analysing a gas sample, **characterized in that** it comprises the following steps implemented using the analysis device as defined in one of Claims 1 to 10:
- activation of the detection assembly to analyse a first gas sample,
- determination of the exceeding of at least one alert threshold after analysis of said first gas sample,
- if an alert threshold is exceeded, automatic activation of the sampling assembly to take a second gas sample.
